# EUROPEAN PATENT APPLICATION

(11) **EP 0 922 908 A1**
(43) Date of publication of application: **16.06.1999**
(21) Application number: 97830661.1
(22) Date of filing: 12.12.1997
(51) Int. Cl.: F23N 5/00, G01N 21/39

(54) **Method and device for measuring the concentration of chemical species and the temperature in the combustion chamber of a thermal plant**

(71) Applicant: FINMECCANICA S.p.A. AZIENDA ANSALDO, 16128 Genova (IT)
(72) Inventor: Calabrò, Bruno, 16161 Genova (IT); Frontini, Luis, 16149 Genova (IT); Pelizza, Maria Luisa, 15059 Volpedo (IT); Repetto, Francesco, 16016 Cogoleto (IT); Signorazzi, Mario, 00043 Ciampino (IT); Varasi, Mauro, 00177 Roma (IT)
(74) Representative: Jorio, Paolo, Dr. Ing.

(57) **Abstract**

To measure the concentration of chemical species and the temperature in a combustion chamber (2) of a thermal plant, a laser beam (4), previously modulated to scan its wavelength about a maximum-absorption frequency of the chemical species of interest, is directed into the chamber (2). A main portion (4a) of the laser beam (4) is directed into the chamber (2), is filtered by an optical filter (22), and is acquired at the output of the chamber (2) to obtain a measuring signal (S), which is subsequently filtered by an electronic filter (23b), is standardized to reduce noise and eliminate undesired signal contributions, and is finally supplied to a processing unit (9). A secondary portion (4b) of the laser beam (4) is directed into a reference cell (24) containing a known concentration of the chemical species, to obtain a reference signal (R) by which to regulate the scanning band of the laser diode (3).

## Description

The present invention relates to a method and device for measuring the concentration of chemical species and the temperature in the combustion chamber of a thermal plant.

In particular, the method and device according to the invention may be used for measuring the concentration of chemical species and the temperature in incineration plants and boilers fired by urban and/or industrial refuse, and thermal plants fired by coal, hydrocarbons or gas produced by gasification and pyrolysis of refuse, biomasses or other fuels.

In thermal plants of the above type, the combustion process must take place in the presence of an excess or lack of oxygen, which is supplied in a stream of primary air injected into the combustion chamber. The ever-increasing demand for improved combustion and control of pollutant emissions therefore calls for precise control of the amount of oxygen injected into the combustion chamber, in that too high or too low a concentration may result in certain chemical species being only partly demolished. In particular, if the combustion chamber contains too much air, and therefore too much oxygen, the temperature in the combustion chamber may not be high enough to break up certain molecules, which are therefore prevented from taking part in the combustion process. On the other hand, too low a concentration of oxygen may impair combustion efficiency, thus resulting in leftover unburnt particles.

Accurate process control also calls for precise localized measurements of the temperature inside the combustion chamber, and of the concentration of other chemical species besides oxygen, such as H₂O, CO, HCl, etc. Which measurements may be made directly or indirectly using the oxygen measurements and given the stoichiometry of the combustion reactions.

To control the concentration of oxygen (or other substances mentioned above) and the temperature inside the combustion chamber, optoelectronic sensors are used, which normally comprise at least one laser diode for directing a laser beam into the combustion chamber through a first optical window in the wall of the chamber; at least one photodetector for picking up the laser beam after traveling through the combustion chamber and a second optical window in the wall of the chamber; and an electronic central control unit for setting the laser diode to a predetermined emission wavelength corresponding to a known absorption line of the chemical species for detection, and for modulating the emission wavelength within a wide band about the predetermined wavelength. If the emission frequency of the laser diode is varied within a wide enough range (of about 10 GHz - easily done when working with single-longitudinal-mode laser diodes), the absorbance measurements made by the sensor device at the emission frequency of its diode (or diodes) determine the Voight curve relative to the absorption band of the chemical species corresponding to the absorption line on whose wavelength the diode is set to emit. By means of appropriate calculations, and given the Lorentz function relative to collision-only broadening of the absorption band of the chemical species (which may be memorized in the central control unit), the central control unit is therefore able to work out the Gaussian curve corresponding to Doppler broadening of the absorption band of the chemical species. As the peak value of the Gaussian curve (which occurs at the selected absorption line) is known to be proportional to the concentration of the chemical species in the volume through which the beam travels, while broadening of the Gaussian curve depends solely on the temperature of the chemical species considered, the central control unit, operating as described, is able to work out the instantaneous concentration and temperature value (the entire 10 GHz band can be scanned in milliseconds or less) of any desired chemical species. For example, by selecting a laser diode with an emission wavelength of about 760 nm and setting the scanning band width, it is possible to determine the concentration and temperature of oxygen.

Though straightforward and economical, methods employing known sensor devices of the above type involve several drawbacks.

In particular, combustion is accompanied by the emission of electromagnetic energy over a wide range of wavelengths, and in particular over wavelengths comparable to those of the laser diode, so that "electromagnetic noise" is superimposed on and impairs the quality of the measuring signal. Moreover, the combustion region always contains powders varying in concentration and particle-size distribution, and which result in diffusion of the laser light, thus impairing the measurement, and in fouling of the combustion chamber windows, thus resulting in further light diffusion and absorption phenomena.

Finally, when setting up the measuring device, it is difficult to align the laser diode accurately with respect to the photodetector, both because of the strong brightness level of the environment, and the fact that laser diodes operating over wavelengths outside the visible spectrum are normally used.

It is an object of the present invention to provide a straightforward, reliable method of measuring the concentration of chemical species, particularly oxygen, and the temperature in the combustion chamber of a thermal plant, and which provides for eliminating the aforementioned drawbacks.

According to the present invention, there is provided a method of measuring the concentration of chemical species and the temperature in the combustion chamber of a thermal plant, as defined in Claim 1.

In particular, the method according to the invention provides for optical filtering and electronic filtering of the detected signal to eliminate background noise. More specifically, optical filtering eliminates noise caused by the background brightness level produced by the flame, while electronic filtering provides for only selecting the signal in phase with emission by the laser

Continuous dynamic standardization (autozeroing) of the detected signal is also performed to eliminate the contribution of the signal generated over the path portion of the laser beam outside the combustion chamber. More specifically, the contribution of oxygen in the air and of interference produced by optical systems interposed between the laser source and photodetector is eliminated by diverting the laser beam along an alternative path outside the combustion chamber, and detecting and memorizing the laser beam signal at the end of the alternative path. The above signal defines a calibration signal, which is subtracted from each signal acquired when the laser beam is directed into the combustion region.

The method according to the invention also provides for directing a portion of the laser beam into a reference cell containing the chemical species at a predetermined temperature and concentration, so as to acquire a reference signal which is later compared with the measuring signal from the combustion chamber. By means of a feedback signal acting on the laser source, the outcome of the comparison provides for accurately centering the emission band of the laser source about the absorption wavelength of the chemical species.

The method according to the invention also provides for optically aligning the various parts of the device using a laser operating in the visible spectrum and fitted directly to the plant for maximum-power performance. Upon command, the laser is turned on and inserted along the optical path of, to assist field alignment of, the measuring laser.

The present invention also relates to a measuring device for implementing the above method, and which is as straightforward and economical as, but involves none of the drawbacks typically associated with, known devices.

According to the present invention, there is provided a device for measuring the concentration of chemical species and the temperature in the combustion chamber of a thermal plant, as defined in Claim 10.

More specifically, the device according to the invention comprises a laser transmitter defined by a laser diode and by a respective optical system for emitting a laser beam; a drive circuit for generating a drive signal for driving the laser diode; a temperature control device; an optical unit for directing and splitting the laser beam (the optical unit in turn comprising an aspheric lens for focusing the laser light from the combustion chamber); a laser receiver in turn comprising a photodetector and respective optical components; electronic circuits for extracting the second derivative and standardizing the measuring signal; and a processing unit for processing the data in the measuring signal.

The device also comprises a reference cell (pressure-sealed) containing a known concentration of the chemical species of interest; optical components for directing part of the measuring laser beam into the cell; and a further photodetector for acquiring the resulting signal, which defines a reference signal by which to control the laser source.

A calibration device, for generating a calibration signal, is inserted at predetermined time intervals along the path of the laser beam, to divert the laser beam along an alternative path outside the combustion chamber, and so acquire a calibration signal.

Finally, the device according to the invention comprises a laser pointing system for emitting visible light by which to align the various parts of the device.

A non-limiting embodiment of the present invention will be described by way of example with reference to the accompanying drawings, in which:
Figure 1 shows, schematically, the device according to the invention at a first step in the measuring method;
Figure 2 shows the Figure 1 device, with parts removed, at a second step in the measuring method;
Figure 3 shows part of the device at a third step in the measuring method;
Figure 4 shows a detail of the device.

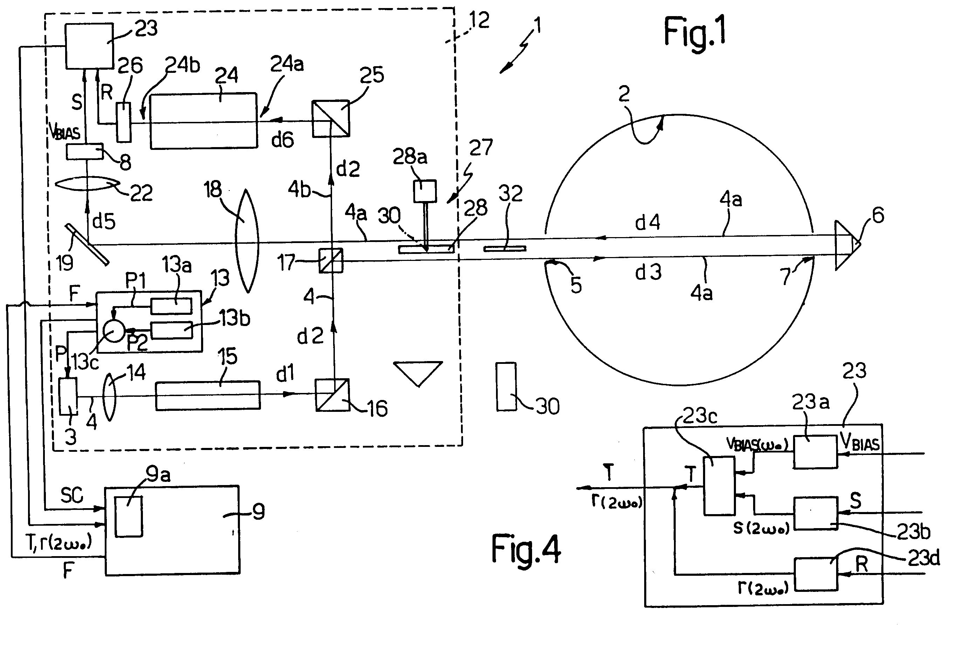

Number 1 in Figure 1 indicates as a whole an optoelectronic sensing device for measuring the concentration and temperature of chemical species in a combustion chamber 2 of an incineration plant, boiler, or thermal plant. Though reference is made in the following description to measuring the concentration and temperature of oxygen, the same measurements may obviously be applied easily to any of the chemical species in chamber 2.

Sensing device 1 comprises a laser diode 3 for generating a laser beam 4 to be directed into combustion chamber 2; an optical prism 6 (known as a "corner tube") for retroreflecting laser beam 4 after traveling through chamber 2; a photodiode 8 for receiving retroreflected laser beam 4; and a processing unit 9 for processing the signal received by photodiode 8. Laser diode 3 and photodiode 8 are housed, together with other optical and electronic components described later on, inside a casing 12 (shown to a larger scale for the sake of simplicity) positioned facing a first window 5 formed in the wall of combustion chamber 2 and through which laser beam 4 is directed.

Laser diode 3 is preferably fitted to a vibration-damping support (not shown), is housed inside and maintained at constant temperature by a thermostatic cell (not shown), and is connected to a drive and supply circuit 13 for supplying laser diode 3 with a drive signal P.

Drive and supply circuit 13 comprises a first circuit 13a for generating a main component P1 (described later on) of drive signal P; a second circuit 13b for generating a secondary component P2 (described later on) of drive signal P; and an adding circuit 13c for adding components P1 and P2 and generating signal P. In addition to drive and supply circuit 13, a known device (not shown) is also provided for controlling the temperature of laser diode 3.

Main component P1 is a saw-tooth signal, which, applied to laser diode 3, provides for scanning the emission wavelength of laser diode 3 over a wide band centered about the maximum-absorption wavelength of the chemical species of interest, so as to analyze both the height (central peak) and width of the main absorption curve of the chemical species and extract the concentration and temperature data. Secondary component P2 is a sinusoidal signal with an angular frequency ω₀ much higher than the maximum angular frequency of component P1, and a much lower amplitude than component P1; and high-frequency modulation of laser diode 3 by means of component P2 provides, as described later on, for extracting a low-noise signal from the signal picked up by photodiode 8.

In addition to laser diode 3, drive and supply circuit 13 is also output-connected to processing unit 9, which it supplies with a synchronizing signal SC comprising a succession of pulses - each emitted at a fixed point along the leading or trailing edge of the saw-tooth signal - and by which processing unit synchronizes the signal acquired by photodiode 8 with the signal emitted by laser diode 3.

To measure the oxygen concentration and temperature in chamber 2, a single-longitudinal-mode laser diode 3 is selected with a central emission frequency of about 760 nm; in which case, drive and supply circuit 13 controls laser diode 3 by means of a signal P whose main component P1 scans the emission wavelength of laser diode 3 over a roughly 20 GHz band centered about the 761 nm wavelength corresponding to the central peak of the oxygen absorption curve.

Laser diode 3 emits laser beam 4 along a path "d1", along which are provided a collimating lens 14 opposite laser diode 3, an optoisolator 15, and a deflector 16 for deflecting laser beam 4 along a path "d2" perpendicular to path "d1".

A beam splitter 17 is provided along path "d2" to deflect a main portion 4a (Figure 1) of laser beam 4 along a path "d3" parallel to path "d1" and extending through window 5, while, at the same time, a secondary portion 4b of laser beam 4 travels through beam splitter 17.

Prism 6 is located along path "d3", externally facing a second window 7 formed in the wall of combustion chamber 2 and diametrically facing window 5, and provides for intercepting main portion 4a of laser beam 4 issuing from chamber 2, and for reflecting it along a path "d4" parallel to path "d3" and extending through windows 5 and 7.

An aspheric focusing lens 18, coaxial with path "d4", focuses main portion 4a of laser beam 4 on a mirror 19 located along, and inclined at a 45° angle with respect to, path "d4", and which provides for intercepting main portion 4a of laser beam 4 issuing from chamber 2, and for deflecting it along a path "d5" parallel to path "d2". Photodiode 8, located along path "d5" with its sensitive surface facing mirror 19, receives main portion 4a of laser beam 4 reflected by mirror 19, and converts it into an electronic analog measuring signal S containing information concerning the absorption curve of the oxygen in chamber 2. At the same time, photodiode 8 supplies an integrated output signal V_{BIAS} proportional to the power of signal S.

Between mirror 19 and photodiode 8, provision is made for an interference filter 22 with a pass band centered about the emission wavelength of laser diode 3, and of such an amplitude as to eliminate most of the undesired spectral components mainly generated during the combustion process. To avoid eliminating desired signal components, however, an interference filter 22 is selected with not too narrow a band, which inevitably contains some undesired spectral components resulting in noise in the aforementioned measuring signal S.

Photodiode 8 is output-connected to an electronic signal processing circuit 23 also housed in casing 12, and which, as described later on, provides for filtering and standardizing measuring signal S from photodiode 8.

With reference to Figure 4, electronic circuit 23 comprises a first electronic filter 23a, which is centered at frequency ω₀, receives integrated signal V_{BIAS}, and generates a standardizing signal v_{BIAS}(ω₀); a second electronic filter 23b, which is centered at frequency 2ω₀, receives measuring signal S, and generates a filtered measuring signal s(2ω₀); and a comparing circuit 23c, which is input-connected to the outputs of first and second electronic filters 23a, 23b, receives standardizing signal v_{BIAS}(ω₀) and filtered measuring signal S(2ω₀), and, after standardizing signal s(2ω₀) with respect to signal v_{BIAS}(ω₀), generates a low-noise signal T. Comparing circuit 23c is output-connected to processing unit 9 to supply processing unit 9 with low-noise signal T. Circuit 23 also comprises a third electronic filter 23d, which is centered at frequency 2ω₀, receives a reference signal R described later on, and generates a filtered reference signal r(2ω₀). Third electronic filter 23d is also output-connected to processing unit 9 to supply processing unit 9 with filtered reference signal r(2ω₀).

The processing unit contains an acquisition board 9a for receiving and converting low-noise signal T and filtered reference signal r(2ω₀) into digital signals for subsequent processing as described later on.

Sensing device 1 also comprises a reference cell 24 housed in casing 12 and containing a known concentration of oxygen (or other chemical species of interest) maintained at a predetermined temperature and pressure. Reference cell 24 has an input window 24a and an output window 24b aligned along a path "d6" parallel to paths "d1", "d3", "d4", and is traveled through by secondary portion 4b of laser beam 4 deflected along path "d6" by a reflector 25 located along path "d2". After traveling through reference cell 24, secondary portion 4b defines an optical reference beam, the intensity of which is modulated by the oxygen absorption curve A(λ). A further photodiode 26, located along path "d6" with its sensitive area facing [reference cell 24], receives and converts secondary portion 4b issuing from reference cell 24 into the analog reference signal R containing information concerning the absorption curve of the oxygen in cell 24.

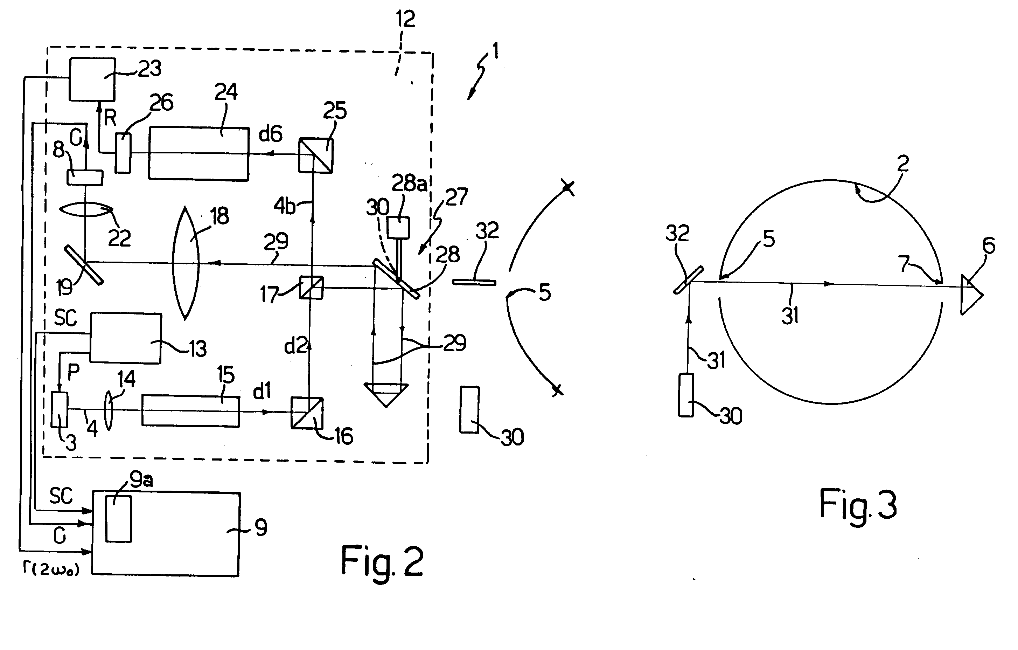

Sensing device 1 also comprises a self-calibrating (autozeroing) device 27 housed inside casing 12 and in turn comprising a mirror 28 located between lens 18 and chamber 2, and which is rotated by an electromagnetic actuator 28a about an axis 30 perpendicular to the drawing plane. More specifically, mirror 28 is rotated between a rest position (Figure 1) assumed during measurement, and in which it is parallel to path "d3" and clear of (i.e. does not interfere with) the path of portion 4a of laser beam 4 (which is therefore allowed through to chamber 2); and an operating position (Figure 2) assumed during calibration operations described later on, and in which it is inclined at a 45° angle with respect to path "d3", and intercepts and deflects main portion 4a of laser beam 4 along an auxiliary path 29 extending entirely inside casing 12 and terminating at photodiode 8. On receiving main portion 4a from auxiliary path 29, photodiode 8 generates a calibration signal C indicating the contribution of the oxygen inside casing 12 and the distortion produced by the optical elements along the path of laser beam 4, and which is sent directly to processing unit 9.

Finally, as shown in Figure 3, sensing device 1 comprises an aligning laser 30 for generating a visible-light beam 31 by which to align the various parts of sensing device 1 before commencing the measurements. For example, visible-light beam 31 may be inserted along path "d3" by a further rotary mirror 32, which, during measurement (Figure 1), is positioned so as not to intercept laser beam 4.

Sensing device 1 operates as follows.

Before commencing the measurements, the optical components are aligned using visible-light beam 31 (as shown in Figure 3).

Laser diode 3 is then turned on, and calibration device 27 is activated to perform a first calibration operation (Figure 2). That is, mirror 28 is rotated from the rest to the operating position to intercept and deflect main portion 4a of laser beam 4 along auxiliary path 29, and so obtain from photodiode 8 calibration signal C, which is memorized in processing unit 9. The calibration operation is repeated at predetermined regular time intervals during the measurement (which is temporarily interrupted each time) so as to accurately and continually update calibration signal C.

At the end of the first (and each successive) calibration operation, mirror 28 is restored to the rest position to direct portion 4a into chamber 2 and measure the oxygen content in the chamber. Portion 4a directed into chamber 2 is retroreflected by prism 6, focused by lens 18, and picked up by photodiode 8, after being deflected by mirror 19 and filtered by filter 22 to eliminate part of the noise contained in it. Photodiode 8 therefore generates measuring signal S and integrated signal V_{BIAS}, which are sent to electronic circuit 23 where integrated signal V_{BIAS} is supplied to first electronic filter 23a centered at frequency ω₀ to obtain normalizing signal v_{BIAS}(ω₀), measuring signal S is supplied to second electronic filter 23b centered at frequency 2ω₀ to obtain filtered measuring signal s(2ω₀), and comparing circuit 23c standardizes signal s(2ω₀) with respect to signal v_{BIAS}(ω₀) to generate low-noise signal T, which is then sent to processing unit 9.

At the same time portion 4a is acquired by photodiode 8, photodiode 26 acquires portion 4b from reference cell 24 and so generates reference signal R; and signal R is supplied to third electronic filter 23d to obtain filtered reference signal r(2ω₀), which is then sent to processing unit 9.

Processing unit 9 acquires and digitizes signals T and r(2ω₀) by means of acquisition board 9a, and synchronizes signals T and r(2ω₀) with the emissions of laser diode 3 by means of synchronizing signal SC. Via software, the last memorized calibration signal C is then subtracted from low-noise signal T to obtain a final signal T' minus the contribution of the oxygen in casing 12 and the distortion produced by the optical components along the path of laser beam 4. The resulting final signal T' is compared with filtered reference signal r(2ω₀) to determine whether the emission of laser diode 3 is actually centered about the maximum-oxygen-absorption line. The outcome of the comparison is negative (as, for example, when laser diode 3 is thermally unstable, thus resulting in undesired fluctuation of the emission wavelength) if final signal T' and filtered reference signal r(2ω₀) are found to have noncoincident maximum-absorption peaks. Such a shift in the spectral measuring window is obviously to be avoided, by final signal T' possibly only containing part of the oxygen-absorption curve, and by the "tail" of the oxygen-absorption curve possibly being missing. In the event of noncoincident signal T' and r(2ω₀) peaks, processing unit 9 supplies drive circuit 13 with a feedback signal F to vary signal P1 and re-center the emission band of laser diode 3 about the maximum-oxygen-absorption wavelength.

Final signal T' is finally processed to obtain information concerning the concentration and temperature of the oxygen in chamber 2.

The main advantage of the above filtration and standardization operations is that of greatly reducing the noise in the measuring signal, by isolating the contribution made by the oxygen in chamber 2 from the contribution made by powder-induced diffusion and by electromagnetic noise generated by the combustion process.

Clearly, changes may be made to the measuring device and method as described and illustrated herein without, however, departing from the scope of the present invention.

For example, the measuring device may be designed to simultaneously measure the concentration of a number of chemical species, by directing into chamber 2, by means of a mirror or optical-fiber system, a number of laser beams regulated so as to each excite a respective chemical species.

As opposed to a saw-tooth signal for frequency scanning, laser diode 3 may be driven by a practically constant-frequency signal set exactly to the maximum oxygen-absorption frequency; the value of which frequency may be determined by processing reference signal R.

Temperature may be measured using two laser diodes driven by a direct latch to two different oxygen-absorption lines; in which case, the temperature inside the combustion chamber is determined according to the relationship between the intensities of the two acquired signals.

## Claims

1. A method of measuring the concentration of chemical species and the temperature in a combustion chamber (2) of a thermal plant, comprising the step of performing an actual measurement in turn comprising the steps of:
- generating (3) at least one laser beam (4) having a wavelength corresponding to the absorption wavelength of a chemical species of interest;
- directing at least a first portion (4a) of said laser beam (4) along a main path (d1-d5) extending through said combustion chamber (2);
- acquiring (8) said first portion (4a), after traveling through said combustion chamber (2), to obtain an electronic analog measuring signal (S);
- converting said analog measuring signal (S) into a digital final measuring signal (T');
- processing said digital final measuring signal (T') to extract information concerning the concentration and/or temperature of said chemical species;
characterized in that said step of generating a laser beam (4) comprises the step of modulating said laser beam (4) with a periodic first modulating signal (P2) having a predetermined excitation frequency (ω₀); and in that the method comprises the further step, after said step of acquiring said first portion (4a), of electronically filtering (23b) said analog measuring signal (S) about a first frequency, correlated with said excitation frequency (ω₀), to extract a filtered measuring signal (s(2ω₀)).

2. A method as claimed in Claim 1, characterized in that said first frequency, about which said step of electronically filtering (23b) said analog measuring signal (S) is performed, equals twice said excitation frequency (ω₀); the method also comprising the step of effecting an optical filtration (22) of said first portion (4a) of the laser beam; said optical filtration being performed after said step of directing said first portion (4a) of the laser beam into said chamber (2), and before said step of acquiring said first portion (4a) of the laser beam.

3. A method as claimed in Claim 1 or 2, characterized by comprising the further steps of:
- extracting from the acquired said first portion (4a) an integrated measuring signal (V_{BIAS}) indicating the power of said analog measuring signal (S);
- effecting an electronic filtration (23a) of said integrated measuring signal (V_{BIAS}) about a second frequency, correlated with said excitation frequency (ω₀), to obtain a standardizing signal (v_{BIAS}(*ω*₀));
- comparing (23c) said filtered measuring signal (s(2ω₀)) and said standardizing signal (v_{BIAS}(ω₀)) obtain a low-noise measuring signal (T).

4. A method as claimed in Claim 3, characterized by performing, preliminary to said actual measurement, a calibration measurement comprising the steps of:
- directing said first portion (4a) of the laser beam along an auxiliary path (29) extending outside said chamber (2) and partly coincident with said main path (d1-d5);
- acquiring (8) said first portion (4a) of the laser beam at the end of said auxiliary path (29) to obtain an electronic analog calibration signal (C);
- memorizing said calibration signal (C);
- subtracting, after said step of obtaining a low-noise measuring signal (T), the memorized said calibration signal (C) from said low-noise measuring signal (T) to obtain said digital final measuring signal (T').

5. A method as claimed in Claim 4, characterized in that said actual measurement is interrupted at predetermined intervals to repeatedly perform said calibration measurement.

6. A method as claimed in any one of the foregoing Claims, characterized by comprising the step of performing, simultaneously with said actual measurement, a reference measurement comprising the steps of:
- directing a second portion (4b) of said laser beam (4) along a secondary path (d2, d6) extending through a reference cell (24) containing said chemical species of interest at a known concentration and temperature;
- acquiring said second portion (4b), after traveling through said reference cell (24), to obtain an electronic analog reference signal (R) containing information concerning the value of a maximum-absorption frequency of said chemical species of interest;
- filtering said reference signal (R) about a frequency correlated with said excitation frequency (ω₀), to obtain a filtered reference signal (r(2ω₀));
- digitizing said filtered reference signal (r(2ω₀));
- processing said filtered reference signal (r(2ω₀)) to extract at least the value of a maximum-absorption frequency of the chemical species of interest.

7. A method as claimed in any one of the foregoing Claims, characterized in that said step of generating (3) a laser beam (4) comprises the step of modulating said laser beam (4) with a periodic second modulating signal (P1) to scan the wavelength of the laser beam (4) about a maximum-absorption frequency of the chemical species of interest.

8. A method as claimed in Claim 7, characterized in that said second signal (P1) is a saw-tooth signal.

9. A method as claimed in any one of the foregoing Claims, characterized by comprising a step of aligning, which step is performed prior to said actual measurement, and in turn comprises the steps of:
- generating (30) a visible-light beam (31);
- directing (32) said visible-light beam (31) towards said chamber (2);
- regulating, according to the path of said visible-light beam (31), the position of a device (1) with respect to said chamber (2), to define said main path (d1, d5).

10. A device for measuring the concentration of chemical species and the temperature in a combustion chamber (2) of a thermal plant, comprising:
- at least a first laser source (3) for generating a respective laser beam (4) having a wavelength corresponding to an absorption wavelength of a chemical species of interest;
- first directing means (16, 17) for directing at least a first portion (4a) of said laser beam along a main path (d1-d5) extending through said chamber (2);
- at least first acquisition means (8) for acquiring said first portion (4a) of the laser beam, after traveling through said chamber (2), and for obtaining from said first portion (4a) of the laser beam an electronic analog measuring signal (S);
- digitizing means (9a) for obtaining, from said analog measuring signal (S), a digital final measuring signal (T');
- processing means (9) for extracting, from said final measuring signal (T'), information concerning the concentration and/or temperature of said chemical species in said chamber (2);
characterized by comprising:
- first modulating means (13b) for modulating said laser source (3), and for modulating said laser source (3) with a periodic first modulating signal (P2) having a predetermined excitation frequency (ω₀); and
- first electronic filtering means (23b) for filtering said analog measuring signal (S) about a first frequency correlated with said excitation frequency, to obtain a filtered measuring signal (s(2ω₀)).

11. A device as claimed in Claim 10, characterized in that said first frequency equals twice said excitation frequency (ω₀); the device also comprising optical filtering means (22) located along said main path (d1-d5) and for filtering said first portion (4a) of the laser beam (4) after said first portion (4a) has traveled through said chamber (2).

12. A device as claimed in Claim 10 or 11, characterized in that said first acquisition means (8) generate an analog integrated measuring signal (V_{BIAS}) indicating the power of said measuring signal (S); and by comprising:
- second electronic filtering means (23a) for filtering said integrated measuring signal (V_{BIAS}) about a frequency correlated with said excitation frequency (ω₀), to obtain a standardizing signal (v_{BIAS}(ω₀));
- comparing means (23c) for comparing said filtered measuring signal (s(2ω₀)) with said standardizing signal (v_{BIAS}(ω₀)) to obtain a low-noise measuring signal (T).

13. A device as claimed in any one of the foregoing Claims from 10 to 12, characterized by comprising a calibration device (27) in turn comprising:
- light deflecting means (28) which rotate between a rest position, wherein said light deflecting means (28) are located clear of said main path (d1-d5), and an operating position, wherein the light deflecting means (28) are located along said main path (d1-d5) and deflect said first portion (4a) along an auxiliary path (29); said auxiliary path (29) partly coinciding with said main path (d1-d5), extending outside said chamber (2), and terminating at said first acquisition means (8);
- actuating means (28a) for rotating said light deflecting means (28) between said rest position and said operating position.

14. A device as claimed in any one of the foregoing Claims from 10 to 13, characterized by comprising:
- a reference cell (24) containing said chemical species of interest at a known concentration and temperature;
- beam splitting means (17) for splitting said laser beam (4) into said first portion (4a) and a second portion (4b);
- second directing means (25) for directing said second portion (4b) of the laser beam along a secondary path (d2, d6) extending through said reference cell (24);
- second acquisition means (26) for acquiring said second portion (4b) of the laser beam, after traveling through said reference cell (24), and for obtaining from said second portion (4b) of the laser beam an electronic analog reference signal (R) containing information concerning the value of a maximum-absorption frequency of said chemical species of interest;
- third electronic filtering means (23d) for filtering said reference signal (R) about a frequency correlated with said excitation frequency (ω₀), to obtain a filtered reference signal (r(2ω₀)).

15. A device as claimed in any one of the foregoing Claims from 10 to 14, characterized by comprising second modulating means (13a) for modulating said laser source (3), and for modulating said laser source (3) with a periodic second modulating signal (P1) to scan the wavelength of the laser beam (4) about a maximum-absorption frequency of the chemical species of interest.

16. A device as claimed in Claim 15, characterized in that said second modulating means (13a) emit a saw-tooth signal (P1).

17. A device as claimed in any one of the foregoing Claims from 10 to 16, characterized by comprising a second laser source (30) for emitting a visible-light beam (31) by which to align said device (1); and second directing means (32) for directing said visible-light beam (31).

18. A device as claimed in any one of the foregoing Claims from 10 to 17, characterized in that said first acquisition means are located on the same side of said chamber (2) as said first laser source (3); and by comprising light reflecting means (6) located on the opposite side of said chamber (2) to said first laser source (3) and along said main path (d1-d5) to retroreflect said first portion (4a) of the laser beam (4).

19. A device as claimed in any one of the foregoing Claims from 10 to 17, characterized in that said first acquisition means are located on the opposite side of the chamber (2) to said first laser source (3).
